# DEMANDE DE BREVET EUROPEEN

(11) **EP 1 830 052 A1**
(43) Date de publication de la demande: **05.09.2007**
(21) Numéro de dépôt: 06110634.0
(22) Date de dépôt: 03.03.2006
(51) Int. Cl.: F02C 6/00, F02C 1/00, F02C 6/18

(54) **Cycle combiné à air**

(71) Demandeur: Antoine, Hubert, 4130 Esneux (BE)
(72) Inventeur: Antoine, Hubert, 4130 Esneux (BE)

(57) **Abrégé**

Un cycle combiné à air (19) (16) (20) utilise la chaleur des gaz d'échappement (5) d'une turbine à gaz pour entraîner un compresseur (18) d'aspiration des gaz d'échappement refroidis (7). La puissance de la turbine à air est ainsi transférée à la turbine à gaz en augmentant le rapport de pression de la turbine (15) sans modifier celui du compresseur (13). Un supplément de puissance est en outre créé par le cycle de Brayton inverse obtenu sur les gaz : détente en (15), refroidissement en (16) (17) et re-compression en (18).

## Description

L'invention concerne un cycle de Brayton-Joule à air combiné à un cycle de turbine à gaz, qui entraîne un compresseur aspirant les gaz d'échappement de la turbine à gaz pour les rejeter à l'atmosphère.

Les turbines à gaz utilisées pour la production de travail mécanique rejettent des gaz d'échappement à une température de 500 à 600 degrés Celsius et leur rendement thermique varie entre 30 et 40 %.

Dans un cycle combiné, on utilise la chaleur des gaz d'échappement comme source chaude pour une autre machine thermique dont la puissance s'ajoute à celle de la machine principale, la turbine à gaz. Le rendement global s'en trouve amélioré par la valorisation de cette source chaude gratuite. Classiquement, ces gaz d'échappement sont envoyés dans un échangeur de chaleur pour générer de la vapeur à haute pression. Cette vapeur est détendue dans une turbine à vapeur dont la puissance ajoutée porte le rendement global du cycle combiné à 50 ou 60 %.

Le cycle de reprise de la chaleur des gaz est un cycle de Rankine, tandis que le cycle de la turbine à gaz est un cycle de Brayton-Joule.

Ceci forme le cycle combiné gaz-vapeur bien connu et largement utilisé dans les grandes centrales de production électrique.

Une autre possibilité de valoriser la chaleur des gaz d'échappement est d'utiliser cette source chaude dans un cycle de Joule au lieu d'un cycle de Rankine à vapeur, c'est le cycle combiné à air.

Cette possibilité est notamment décrite dans les brevets US 4,751,814 et EP 0 208 162 B1 : les gaz d'échappement de la turbine à gaz passent dans un échangeur de chaleur pour y réchauffer de l'air. Cet air a été préalablement comprimé dans un compresseur, puis, une fois réchauffé, est détendu dans une turbine et ensuite déchargé à l'atmosphère ou utilisé dans un procédé. La puissance nette à l'arbre du système compresseur-turbine sert à entraîner une charge, un alternateur par exemple.

Dans le brevet US 5,442,904 le cycle combiné à air entraîne une charge et un système de génération d'air froid. Le brevet US 6,050,082 décrit un cycle combiné à air qui entraîne un compresseur d'air qui alimente l'entrée de la turbine à gaz.

Plusieurs avantages résultent du cycle combiné à air: augmentation du rendement global bien sûr, production d'air pur et chaud en amont ou en sortie turbine pour divers procédés de séchage ou chauffage, flexibilité accrue de l'installation, nul besoin d'eau.

La présente invention a pour but d'améliorer le rendement et la puissance d'un cycle combiné à air tout en simplifiant le mode d'utilisation de la puissance du cycle à air.

Dans l'invention, ce but est atteint en utilisant le travail de la turbomachine à air pour entraîner un compresseur. Ce compresseur aspire les gaz d'échappement de la turbine à gaz après leur passage dans l'échangeur de chaleur et dans un refroidisseur, pour les ramener à la pression atmosphérique. On augmente ainsi le rapport de détente de la turbine et son travail moteur. Ce faisant, on crée aussi un cycle de Brayton inverse pour les gaz d'échappement : détente supplémentaire dans la turbine de la turbine à gaz, refroidissement et re-compression. Ce cycle de Brayton inverse sur les gaz produit un travail supplémentaire qui s'ajoute à celui du cycle de Joule à air. On peut grâce à cela atteindre un rendement proche de celui des meilleurs cycles combinés à vapeur.

La partie mécanique est grandement simplifiée car le compresseur des gaz d'échappement est monté directement sur l'arbre de la turbomachine à air, contrairement à un alternateur classique qui doit être muni d'un réducteur de vitesse. De plus, ce compresseur sert de démarreur au cycle à air lors du démarrage de l'installation, car il est alors entraîné par le flux des gaz d'échappement.

La dépression en sortie de la turbine à gaz, créée par l'action de ce compresseur ne modifie pas les paramètres principaux de fonctionnement de la turbine à gaz ; rapport de pression, débit massique, températures. Par conséquent, le compresseur et la chambre de combustion de la turbine à gaz continuent de fonctionner à leur point nominal, sans modification. Seules la pression et la température en sortie turbine seront diminuées.

Ceci a d'ailleurs un effet bénéfique sur la durée de vie de l'échangeur de chaleur placé en aval de la turbine à gaz.

En sortie de la turbine à air, la température de l'air est typiquement de 250 à 350 degrés Celsius, ce qui permet son utilisation pour l'industrie du séchage qui demande de l'air pur et chaud.

Il est aussi possible d'effectuer une réchauffe sur ce cycle pour en augmenter la puissance ou pour compenser la perte de puissance nominale par temps chaud. Ceci se fera en montant un brûleur soit sur le circuit d'air devant la turbine à air, soit en sortie de la turbine à gaz devant l'échangeur de chaleur. Dans ce dernier cas, l'échangeur subit l'élévation de la température des gaz, ce qui réduit sa durée de vie, mais l'air en sortie de la turbine à air reste pur, n'ayant pas subi de combustion.

Ce cycle à air n'a pas besoin de système de contrôle de la vitesse, celle ci est auto-régulée; en effet, si la turbine à air venait à accélérer, le travail demandé aux compresseurs et leur rapport de pression augmenteraient tandis que la température à l'entrée de la turbine à air diminuerait, suite à la diminution de température des gaz consécutive à l'augmentation de la détente dans la turbine à gaz. Ceci à pour conséquence que le travail demandé est supérieur à l'offre, le résultat est une décélération de la turbine à air.

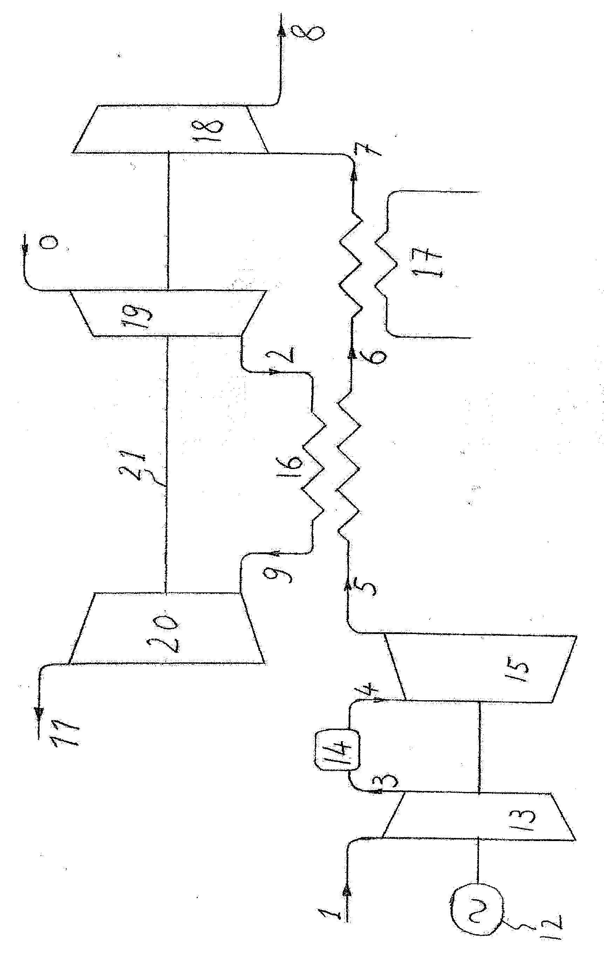

L'invention est décrite ci après à l'aide de l'exemple et de la figure ci joints dans lesquels :

Une turbine à gaz comprend un compresseur (13) aspirant l'air ambiant en (1) et le comprimant en (3), une chambre de combustion (14) recevant l'air comprimé et le fuel et renvoyant les gaz brûlés en (4) à la turbine (15) qui les détend et les relâche en (5). Cette turbine à gaz entraîne la charge extérieure (12).

Un échangeur de chaleur gaz-air (16) reçoit les gaz brûlés en (5) et les rend refroidis en (6), tandis que l'air entre en (2) et ressort réchauffe en (9).

Les gaz entrent en (6) et sortent en (7) d'un refroidisseur (17).

Une turbomachine à air comprend un compresseur (19) aspirant l'air ambiant en (0) et le comprimant en (2), une turbine (20) recevant en (9) l'air chaud issu de l'échangeur de chaleur (16) et le relâchant en (11) et un compresseur (18) qui aspire les gaz d'échappement en (7) pour les re-comprimer à la pression atmosphérique en (8).

Le travail moteur effectué par la turbine (20) entraîne les compresseurs (18) et (19). Les éléments (18), (19) et (20) sont montés sur un arbre commun (21).

Lors du démarrage de la turbine à gaz, des gaz chauds sont produits en (5) et trouvent leur sortie à l'atmosphère via le compresseur (18) qu'ils entraînent en rotation.

Dès lors, le compresseur (19), mis aussi en rotation, envoie de l'air dans l'échangeur (16). Cet air, réchauffé par les gaz d'échappement se détend dans la turbine (20) avec production de travail qui servira à accélérer la rotation de la turbine à air.

Le régime de celle-ci établi, le compresseur (18) crée une dépression dans l'échappement de la turbine à gaz, ceci augmente le rapport de pression de la turbine (15) et son travail moteur. Le travail du cycle à air est ainsi transféré pneumatiquement, via le compresseur (18) à la turbine à gaz, suite à l'augmentation du travail fourni par la turbine (15). Le supplément de travail moteur effectué par la turbine (15) excède le travail fourni au compresseur (18) par la turbomachine à air, on a donc une multiplication du rendement et du travail grâce au cycle de Brayton inverse constitué par la turbine (15), le refroidissement des gaz dans les échangeurs (16) et (17) et le compresseur (18).

## Revendications

1. Cycle thermodynamique combiné utilisant la chaleur des gaz d'échappement (5) d'une turbine à gaz, lequel comprend un compresseur à air (19), un échangeur de chaleur (16) transférant la chaleur des gaz d'échappement (5) de la turbine à gaz à l'air comprimé (2), une turbine à air (20) détendant l'air comprimé chauffé (9), un compresseur à gaz d'échappement (18) entraîné par la turbine (20), un arbre de transmission (21) reliant les organes (18), (19) et (20), un échangeur de chaleur (17) refroidissant les gaz d'échappement (6), **caractérisé en ce que**:
Le compresseur (18) utilise tout le travail moteur dégagé par la turbomachine à air (19) (20) pour aspirer les gaz d'échappement refroidis (7) et les restituer à l'atmosphère.
La turbomachine à air (19) (20) a un débit nominal sensiblement égal à celui de la turbine à gaz (13) (14) (15).
La dépression créée en (5) par l'action du compresseur (18) augmente le rapport de pression de la turbine (15) sans modifier celui du compresseur (13).

2. Cycle thermodynamique selon la revendication 1, **caractérisé en ce que** le compresseur (18) sert de démarreur pour la turbine à air lors du démarrage de la turbine à gaz par l'action des gaz d'échappement de celle-ci sur (18).
